# EUROPEAN PATENT APPLICATION

(11) **EP 4 819 221 A1**
(43) Date of publication of application: **07.10.2026**
(21) Application number: 24921436.2
(22) Date of filing: 12.09.2024
(51) Int. Cl.: H01M 4/133, H01M 4/62, H01M 10/0525

(54) **SECONDARY BATTERY AND PREPARATION METHOD THEREFOR, AND ELECTRIC DEVICE**

(30) Priority: 30.01.2024 CN 202410129866
(71) Applicant: Contemporary Amperex Technology Co., Limited, Ningde, Fujian 352100 (CN)
(72) Inventor: YUN, Liang, Ningde, Fujian 352100 (CN); SUN, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/118532
(87) International publication number: WO 2025/161411

(57) **Abstract**

A secondary battery and a preparation method therefor, and an electric device. The secondary battery comprises a positive electrode sheet (1) and a negative electrode sheet (1'); the positive electrode sheet and/or the negative electrode sheet comprise a current collector (10) and an active material layer (11); the active material layer (11) is provided on at least one side of the current collector (10); the active material layer (11) comprises an additive, and the additive is provided with through holes; and the tortuosity of the active material layer (11) is 1.9-5.68. In this way, the transmission path of an electrolyte solution can be shortened, and the transmission rate of the electrolyte solution on the positive electrode sheet and/or the negative electrode sheet can be increased, thereby improving the infiltration effect of the electrolyte solution on the electrode sheet, improving the exertion of a capacity per gram of the electrode sheet, and improving the rate performance and the energy density of batteries (5).

## Description

### TECHNICAL FIELD

The present application relates to the field of batteries, and in particular, to a secondary battery and a preparation method therefor, and an electric device.

### BACKGROUND

Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. In order to increase the transmission rate of an electrolyte solution on an electrode sheet, pores need to be formed in an active material layer. At present, the transmission rate of the electrolyte solution in batteries on the electrode sheet is slow, and especially for a thick electrode, the infiltration effect of the electrolyte solution on part of the active material layer close to a current collector is poor, which reduces the rate performance and the energy density of batteries.

### SUMMARY

In view of the technical problems in the background, the present application provides a secondary battery, which can increase the transmission rate of an electrolyte solution and improve the rate performance and the energy density of batteries.

A first aspect of the present application provides a secondary battery, comprising: a positive electrode sheet and a negative electrode sheet, the positive electrode sheet and/or the negative electrode sheet comprising: a current collector; and an active material layer, wherein the active material layer is provided on at least one side of the current collector, the active material layer comprises an additive, the additive is provided with through holes, and the tortuosity of the active material layer is 1.9-5.68. In this way, the transmission path of an electrolyte solution is shortened, and the transmission rate of the electrolyte solution is increased, thereby improving the infiltration effect of the electrolyte solution on the electrode sheet, improving the exertion of a capacity per gram of the electrode sheet, and improving the rate performance and the energy density of batteries.

According to some embodiments of the present application, the tortuosity of the active material layer on the positive electrode sheet is 1.9-5.6. In this way, by forming the through holes on the active material layer, the tortuosity of the active material layer is reduced, and the transmission rate of the electrolyte solution on the positive electrode sheet is increased, thereby improving the infiltration effect of the electrolyte solution on the positive electrode sheet, improving the exertion of a capacity per gram of the positive electrode sheet, and improving the rate performance and the energy density of batteries.

According to some embodiments of the present application, the tortuosity of the active material layer on the negative electrode sheet is 1.62-5.68. In this way, by forming the through holes on the active material layer, the tortuosity of the active material layer is reduced, and the transmission rate of the electrolyte solution on the negative electrode sheet is increased, thereby improving the infiltration effect of the electrolyte solution on the negative electrode sheet, improving the exertion of a capacity per gram of the negative electrode sheet, and improving the rate performance and the energy density of batteries.

According to some embodiments of the present application, based on the total mass of the active material layer, the mass percentage of the additive is 0.5%-10%. In this way, by allowing the content of the additive to be within the above range, the number of through holes on the active material layer can be further increased, and the transmission rate of the electrolyte solution can be increased, thereby improving the infiltration effect of the electrolyte solution on the electrode sheet, improving the exertion of a capacity per gram of the electrode sheet, and improving the rate performance and the energy density of batteries.

According to some embodiments of the present application, the additive satisfies one or more of the following conditions: the aperture of the through holes is 100 nm-500 nm; and the thickness of the through holes is 1 µm-20 µm. In this way, the liquid phase mass transfer capability of the through holes is improved, and the transmission rate of the electrolyte solution is increased.

According to some embodiments of the present application, the additive comprises a whisker carbon nanotube. In this way, the above type of additive has a through hole structure, which may increase the transmission rate of the electrolyte solution, thereby improving the infiltration effect of the electrolyte solution on the electrode sheet, improving the exertion of a capacity per gram of the electrode sheet, and improving the rate performance and the energy density of batteries.

According to some embodiments of the present application, the thickness of the active material layer on the positive electrode sheet is greater than or equal to 300 µm; or the thickness of the active material layer on the negative electrode sheet is 120 µm-210 µm. In this way, when the active material layer is thick, since the active material layer has a through hole structure, the transmission rate of the electrolyte solution can be increased, the infiltration effect of the electrolyte solution on the active material layer close to the current collector can be improved, the exertion of a capacity per gram of the electrode can be improved, and the rate performance and the energy density of batteries can be improved.

According to some embodiments of the present application, the porosity of the positive electrode sheet and/or the negative electrode sheet is 20%-47%. In this way, the transmission rate of the electrolyte solution is increased.

According to some embodiments of the present application, the active material layer comprises a first active material layer and a second active material layer, the first active material layer is provided on at least one side of the current collector, the second active material layer is provided on one side of the first active material layer away from the current collector, and the second active material layer is provided with the additive. In this way, by allowing the additive to be located in the second active material layer, there is a concentration difference between the ions of the second active material layer and the first active material layer, which can further increase the rate of the electrolyte solution and improve the infiltration effect of the electrolyte solution on the electrode sheet.

According to some embodiments of the present application, the thickness of the second active material layer is greater than or equal to the thickness of the first active material layer.

According to some embodiments of the present application, a ratio of the thickness of the second active material layer to the thickness of the first active material layer is 1.2-1.4.

In this way, by allowing the thickness of the second active material layer and the thickness of the first active material layer to satisfy the above relationship, the infiltration effect of the electrolyte solution on the first active material layer can be improved, thereby improving the exertion of a capacity per gram of the electrode sheet, and improving the energy density of batteries.

According to some embodiments of the present application, the active material layer of the negative electrode sheet comprises the additive. In this way, the transmission rate of the electrolyte solution on the negative electrode sheet is increased, and the rate performance of batteries is improved.

A second aspect of the present application provides a method for preparing a secondary battery, comprising: preparing a positive electrode sheet and/or a negative electrode sheet, a method for preparing the positive electrode sheet and/or the negative electrode sheet comprising: forming an active material layer on at least one side of a current collector, wherein the active material layer comprises an additive, the additive is provided with through holes, and the tortuosity of the active material layer is 1.9-5.68. In this way, the secondary battery prepared by the method has all the features and advantages of the secondary battery provided in the first aspect of the present application, which will not repeated here. In general, there is provided at least excellent rate performance and high energy density.

According to some embodiments of the present application, a method for forming the active material layer comprises: forming a first active material layer on at least one side of the current collector; and forming a second active material layer on one side of the first active material layer away from the current collector, wherein the second active material layer comprises the additive. In this way, the transmission rate of the electrolyte solution is further increased, and the infiltration effect of the electrolyte solution on the electrode sheet is improved.

A third aspect of the present application provides an electric device, comprising the secondary battery provided in the first aspect of the present application.

Additional aspects and advantages of the present application will be partly provided in the following description, and partly become evident in the following description or understood through the practice of the present application.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic structural diagram of a positive electrode sheet or a negative electrode sheet according to an implementation of the present application.
FIG. 2 is a schematic structural diagram of an electrode sheet according to another implementation of the present application.
FIG. 3 is an SEM diagram of a whisker carbon nanotube.
FIG. 4 is a schematic diagram of a battery according to an implementation of the present application.
FIG. 5 is an exploded diagram of the battery according to an implementation of the present application shown in FIG. 4.
FIG. 6 is a schematic diagram of a battery module according to an implementation of the present application.
FIG. 7 is a schematic diagram of a battery pack according to an implementation of the present application.
FIG. 8 is an exploded diagram of the battery pack according to an implementation of the present application shown in FIG. 7.
FIG. 9 is a schematic diagram of an electric device using a battery as a power supply according to an implementation of the present application.

### Description of reference signs:

1: positive electrode sheet; 1': negative electrode sheet; 10: current collector; 11: active material layer; 111: first active material layer; 112: second active material layer; 6: battery pack; 2: upper case; 3: lower case; 4: battery module; 5: battery; 51: housing; 52: electrode assembly; 53: cover plate.

### DETAILED DESCRIPTION OF PREFERRED EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of batteries continues to expand, a market demand for the batteries continues to increase.

In order to increase the transmission rate of an electrolyte solution on an electrode sheet, pores need to be formed in an active material layer. In the related art, pore forming is mainly performed by adding an ammonium bicarbonate pore-forming agent and an azo pore-forming agent to the active material layer, and air channels generated after the pore-forming agents are decomposed can be used as pores for the transmission of the electrolyte solution. However, pore channels formed in this way are curved, which increases the length of the transmission path of the electrolyte solution, reduces the ion transmission rate, and reduces the infiltration effect on the active material layer. Especially when the active material layer on the electrode sheet is thick, the infiltration effect of the electrolyte solution on part of the active material layer close to the current collector is poor, which reduces the exertion of a capacity per gram of the electrode, and reduces the rate performance and the energy density of batteries.

In the secondary battery provided in the present application, the active material layer on the positive electrode sheet and/or the negative electrode sheet comprises an additive provided with through holes, and the through holes may be directly used for the transmission of the electrolyte solution. Compared with the curved pore channels formed by the pore-forming agents, the degree of curvature of the through holes is small, which shortens the transmission path of the electrolyte solution on the positive electrode sheet and/or the negative electrode sheet, increases the transmission rate of the electrolyte solution, and is more conducive to the backflow of the electrolyte solution. The acceleration of the transmission rate can improve the infiltration effect of the electrolyte solution on the active material layer and reduce the liquid phase polarization, thereby improving the utilization rate of an active material, improving the exertion of a capacity per gram of the positive electrode sheet and/or the negative electrode sheet, and improving the energy density and the rate performance of batteries. Since the transmission rate of the electrolyte solution is accelerated, the low-temperature performance of batteries can also be improved.

The secondary battery provided in the present application comprises a lithium-ion battery or a sodium-ion battery, and the secondary battery disclosed in the embodiments of the present application may be used in an electric device using a secondary battery as a power supply or various energy storage systems using a battery as an energy storage element. The electric device may comprise, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a secondary battery, comprising a positive electrode sheet 1 and a negative electrode sheet 1', the positive electrode sheet 1 and/or the negative electrode sheet 1'comprising:a current collector 10; and an active material layer 11, wherein the active material layer 11 is provided on at least one side of the current collector 10, the active material layer 11 comprises an additive, the additive is provided with through holes, and the tortuosity of the active material layer 11 is 1.9-5.68. In this way, by providing, in the active material layer 11 of the positive electrode sheet 1 and/or the negative electrode sheet 1', the additive which is provided with through holes, the tortuosity of the active material layer 11 can be reduced, and the electrolyte solution is directly transmitted through the through holes, which shortens the transmission path of the electrolyte solution on the positive electrode sheet 1 and/or the negative electrode sheet 1', and increases the transmission rate of the electrolyte solution, thereby improving the infiltration effect of the electrolyte solution on the positive electrode sheet 1 and/or the negative electrode sheet 1', reducing the liquid phase polarization, improving the utilization rate of the active material, improving the exertion of a capacity per gram of the positive electrode sheet 1 and/or the negative electrode sheet 1', and improving the rate performance and the energy density of batteries. Since the transmission rate of the electrolyte solution is accelerated, the low-temperature performance of batteries can also be improved.

In the present application, a through hole refers to: a hole with an aperture change rate of ≤5% and a curvature of ≤10% in an extending direction of the through hole.

In the present application, the tortuosity refers to the degree of curvature of the transmission path of an electrolyte solution of a porous electrode. A test method of the tortuosity of the active material layer 11 is that: the pore ionic resistance Rion is tested by means of a symmetric battery, and the tortuosity τ is calculated according to the porosity, the thickness of the electrode sheet, and the conductivity of the electrolyte solution. τ=(Rion×A×ε×σ)/d, where Rion is the pore ionic resistance, A is the area of the electrode sheet in cm², ε is the porosity in %, σ is the conductivity in ms/cm, and d is the thickness of the electrode sheet in cm.

According to some embodiments of the present application, the tortuosity of the active material layer 11 is 1.9-5.68, for example, may be 1.9, 2.51, 3.02, 3.53, 4.12, 4.57, 5.12, 5.68, or the like, or may be a range formed by any of the above values. In this way, the tortuosity of the active material layer 11 is controlled within the above range, which can shorten the transmission path of the electrolyte solution, increase the transmission rate of the electrolyte solution, improve the infiltration effect of the electrolyte solution on the active material layer 11, and improve the rate performance and the energy density of batteries. According to some specific embodiments of the present application, the tortuosity of the active material layer 11 is 1.9-4.26.

According to some embodiments of the present application, based on the total mass of the active material layer 11, the mass percentage of the additive may be 0.5%-10%. For example, the mass percentage may be 0.5%, 1%, 3%, 5%, 7%, 9%, 10%, or the like, or may be a range formed by any of the above values. In this way, by allowing the content of the additive to be within the above range, the number of through holes on the active material layer 11 can be further increased, and the transmission rate of the electrolyte solution can be increased, thereby improving the infiltration effect of the electrolyte solution on the electrode sheet 1, improving the exertion of a capacity per gram of the electrode sheet 1, and improving the rate performance and the energy density of batteries.

In the present application, a test method of the content of the additive is a thermogravimetric test. Specifically, under a nitrogen atmosphere, the airflow velocity is 50 ml/min, the temperature rises from room temperature to 2000°C at a rate of 20°C/min, and the content of the additive is obtained according to the mass percentage of the decomposition characteristic peak.

According to some embodiments of the present application, the aperture of the through holes may be 100 nm-500 nm, for example, may be 100 nm, 200 nm, 300 nm, 400 nm, 500 nm, or the like, or may be a range formed by any of the above values. In this way, the transmission rate of the electrolyte solution on the electrode sheet 1 is increased while allowing the though holes to have the liquid phase mass transfer capability, thereby improving the infiltration effect of the electrolyte solution on the active material layer 11, improving the exertion of a capacity per gram of the electrode sheet 1, and improving the rate performance and the energy density of batteries.

In the present application, the aperture of a through hole refers to the diameter of the hole on the cross sections of the through hole. The aperture of the through holes can be tested by a scanning electron microscope.

According to some embodiments of the present application, the length of the through holes is 1 µm-20 µm, for example, may be 1 µm, 3 µm, 5 µm, 7 µm, 9 µm, 11 µm, 13 µm, 15 µm, 17 µm, 19 µm, 20 µm, or the like, or may be a range formed by any of the above values. In this way, by allowing the length of the through holes to be within the above range, the transmission rate of the electrolyte solution on the active material layer 11 can be increased, thereby improving the infiltration effect of the electrolyte solution on the active material layer 11, improving the exertion of a capacity per gram of the electrode sheet 1, and improving the rate performance and the energy density of batteries.

In the present application, the length of the through holes can be measured by a scanning electron microscope.

According to some embodiments of the present application, the additive comprises a whisker carbon nanotube. In this way, the above type of additive has a through hole structure, and the through hole can be directly used for the transmission of the electrolyte solution, which shortens the transmission path of the electrolyte solution and increases the transmission rate of the electrolyte solution, thereby improving the infiltration effect of the electrolyte solution on the positive electrode sheet 1 and/or the negative electrode sheet 1', reducing the liquid phase polarization, improving the utilization rate of the active material, improving the exertion of a capacity per gram of the positive electrode sheet 1 and/or the negative electrode sheet 1', and improving the rate performance and the energy density of batteries. Since the transmission rate of the electrolyte solution is accelerated, the low-temperature performance of batteries can also be improved.

According to some embodiments of the present application, the thickness of the active material layer on the positive electrode sheet 1 is greater than or equal to 300 µm; or, the thickness of the active material layer on the negative electrode sheet 1 ' is 120 µm-210 µm. For example, the thickness of the active material layer on the positive electrode sheet 1 may be 300 µm, 330 µm, 360 µm, 390 µm, 420 µm, 450 µm, 480 µm, 500 µm, or the like, or may be a range formed by any of the above values. The thickness of the active material layer on the negative electrode sheet 1' may be 120 µm, 130 µm, 140 µm, 150 µm, 160 µm, 170 µm, 180 µm, 190 µm, 200 µm, 210 µm, or the like, or may be a range formed by any of the above values. At this time, although the active material layer 11 is thick, since the additive in the active material layer 11 has a through hole structure, and the through holes can be directly used for the transmission of the electrolyte solution, the transmission path of the electrolyte solution is shortened and the transmission rate of the electrolyte solution is increased, thereby improving the infiltration effect of the electrolyte solution on the positive electrode sheet 1 and/or the negative electrode sheet 1', especially improving the infiltration effect of the electrolyte solution on part of the active material layer 11 close to the current collector 10, reducing the liquid phase polarization, improving the utilization rate of the active material, improving the exertion of a capacity per gram of the positive electrode sheet 1 and/or the negative electrode sheet 1', and improving the rate performance and the energy density of batteries. Since the transmission rate of the electrolyte solution is accelerated, the low-temperature performance of batteries can also be improved.

According to some embodiments of the present application, the porosity of the positive electrode sheet 1 and/or the negative electrode sheet 1' may be 20% -47%. For example, the porosity may be 20%, 25%, 27%, 29%, 31%, 33%, 35%, 37%, 39%, 41%, 43%, 45%, 47%, or the like, or a range formed by any of the above values. In this way, by allowing the porosity of the positive electrode sheet 1 and/or the negative electrode sheet 1' to be within the above range, the transmission path of the electrolyte solution can be increased, thereby increasing the transmission rate of the electrolyte solution on the positive electrode sheet 1 and/or the negative electrode sheet 1', improving the infiltration effect of the electrolyte solution on the active material layer 11, improving the utilization rate of the active material, and improving the rate performance and the energy density of batteries.

In the present application, a test method of the porosity is pretreatment, in which: 30 round pieces with good appearance and no powder falling off from the edge are selected and put into a sample cup; the number of pieces is recorded, and the apparent volume is calculated; and testing is performed: the sample cup containing a sample is placed in a true density tester, the test system is sealed, a helium gas is introduced according to the procedure, the pressure of a gas in a sample chamber and an expansion chamber is detected, and then the true volume is calculated according to the Bohr's law (PV=nRT), so as to obtain the porosity of a sample to be tested.

According to some embodiments of the present application, the active material layer 11 may comprise a first active material layer 111 and a second active material layer 112, the first active material layer 111 is provided on at least one side of the current collector 10, the second active material layer 112 is provided on one side of the first active material layer 111 away from the current collector 10, and the second active material layer 112 is provided with the additive. In this way, by allowing the additive to be located in the second active material layer 112, the transmission rate of the electrolyte solution in the second active material layer 112 is greater than the transmission rate in the first active material layer 111, and the ion concentration in the second active material layer 112 is greater than the ion concentration in the first active material layer 111, that is, there is a concentration difference between the ions of the second active material layer 112 and the first active material layer 111. The concentration difference can further increase the transmission rate of the electrolyte solution and improve the infiltration effect of the electrolyte solution on the first active material layer 111, thereby improving the utilization rate of the active material in the first active material layer 111, improving the exertion of a capacity per gram of the electrode sheet 1, and improving the rate performance and the energy density of batteries.

According to some embodiments of the present application, the thickness of the second active material layer 112 is greater than or equal to the thickness of the first active material layer 111. That is, a ratio of the thickness of the active material layer 11 provided with the additive to the thickness of the entire active material layer 11 is greater than or equal to 0.5. In this way, the mass percentage of the additive on the entire active material layer 11 is increased, and the number of the through holes is increased, thereby increasing the number of the electrolyte solution transmission paths, increasing the transmission rate of the electrolyte solution, and improving the rate performance and the energy density of batteries. According to some specific embodiments of the present application, a ratio of the thickness of the second active material layer 112 to the thickness of the first active material layer 111 is 1.2-1.4.

In the present application, the thickness of the active material layer 11 can be tested by a scanning electron microscope.

According to some embodiments of the present application, the active material layer of the negative electrode sheet 1' comprises the additive. By providing, in the negative electrode active material layer 11 of the negative electrode sheet 1', the additive provided with through holes, the transmission rate of the electrolyte solution on the negative electrode sheet 1' can be increased, and the transmission rate of ions on the negative electrode sheet 1' can be increased, thereby improving the rate performance of batteries and improving the fast charging capability of batteries.

A second aspect of the present application provides a method for preparing a secondary battery, comprising preparing a positive electrode sheet 1 and a negative electrode sheet 1', a method for preparing the positive electrode sheet 1 and/or the negative electrode sheet 1' comprising: forming an active material layer 11 on at least one side of a current collector 10, wherein the active material layer 11 comprises an additive, the additive is provided with through holes, and the tortuosity of the active material layer 11 is 1.9-5.68. In this way, the positive electrode sheet 1 and/or the negative electrode sheet 1' prepared by the method can reduce the tortuosity of the active material layer 11 only by providing, in the active material layer 11, the additive having a through hole structure, and the electrolyte solution is directly transmitted through the through holes, which can shorten the transmission path of the electrolyte solution without the need for other process means for pore forming, and can reduce the damage to the positive electrode sheet 1 and/or the negative electrode sheet 1'.

According to some embodiments of the present application, when the active material layer 11 comprises the first active material layer 111 and the second active material layer 112, a method for forming the active material layer 11 comprises: forming a first active material layer 111 on at least one side of the current collector 10; and forming a second active material layer 112 on one side of the first active material layer 111 away from the current collector 10, wherein the second active material layer 112 comprises the additive. In this way, the transmission rate of the electrolyte solution is further increased, and the infiltration effect of the electrolyte solution on the electrode sheet is improved.

Specifically, a slurry of the first active material layer 111 and a slurry of the second active material layer 112 may be formed respectively, and synchronously coated on the current collector 10 and dried to form the first active material layer 111 and the second active material layer 112.

Generally, the battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being shortcircuited and allow ions to pass through.

The positive electrode sheet comprises a positive electrode current collector and a positive electrode active material layer provided on at least one surface of the positive electrode current collector, the positive electrode active material layer comprising the positive electrode active material in the first aspect of the present application.

As an example, the positive electrode current collector has two surfaces opposite to each other in its own thickness direction, and the positive electrode active material layer is disposed on either one or both of the two opposite surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, when the battery is a lithium-ion battery, the positive electrode active material may use a positive electrode active material well-known in the art for lithium-ion batteries. As an example, the positive electrode active material may comprise at least one of the following materials: olivine-structured lithium-containing phosphate, a lithium-transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.8}Co_{0.15}Al_{0.05}O₂), modified compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some implementations, for example, when the battery is a sodium-ion battery, as an example, the positive electrode active material may include, but is not limited to, at least one of a layered transition metal oxide, a polyanionic compound, and a Prussian blue analog.

As an example of the layered transition metal oxide, the following can be listed:
Naₗ₋ₓCuₕFeₖMnₗM^{l}ₘO_{2-y}, where M^{l} is one or more of Li, Be, B, Mg, Al, K, Ca, Ti, Co, Ni, Zn, Ga, Sr, Y, Nb, Mo, In, Sn, and Ba; and 0<x≤0.33, 0<h≤0.24, 0≤k≤0.32, 0<l≤0.68, 0≤m<0.1, h+k+l+m=1, and 0≤y<0.2;
Na_{0.67}Mn_{0.7}Ni_{z}M²_{0. 3-z}O₂, where M² is one or more of Li, Mg, Al, Ca, Ti, Fe, Cu, Zn, and Ba; and 0<z≤0.1; and
NaₐLi_{b}Ni_{c}Mn_{d}FeₑO₂, where 0.67 < *a* ≤ 1, 0 < *b* < 0.2, 0 < *c* < 0.3, 0.67 < *d* + *e* < 0.8, and *b* + *c* + *d* + *e* = 1.

As an example of the polyanionic compound, the following can be listed:
A¹_{f}M³_{g}(PO₄)ᵢOⱼX¹₃₋ⱼ, where A¹ is one or more of H, Li, Na, K, and NH₄; M³ is one or more of Ti, Cr, Mn, Fe, Co, Ni, V, Cu, and Zn; X¹ is one or more of F, Cl, and Br; and 0<f≤4, 0<g≤2, 1≤i≤3, and 0≤j≤2;
NaₙM⁴PO₄X², where M⁴ is one or more of Mn, Fe, Co, Ni, Cu, and Zn; X² is one or more of F, Cl, and Br; and 0<n≤2;
NaₚM⁵_{q}(SO₄)₃, where M⁵ is one or more of Mn, Fe, Co, Ni, Cu, and Zn; and 0<p≤2, and 0<q≤2; and
NaₛMnₜFe₃₋ₜPO₄)₂(P₂O₇), where 0 < *s* ≤ 4, 0 ≤ *t* ≤ 3, and for example, *t* is 0, 1, 1.5, 2, or 3.

As an example of the Prussian blue analog, the following can be listed:
AᵤM⁶ᵥ[M⁷(CN)₆]_{w}·xH₂O, where A is one or more of H⁺, NH₄⁺, an alkali metal cation, and an alkaline earth metal cation; M⁶ and M⁷ are each independently one or more of transition metal cations; and 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺; and M⁶ and M⁷ are each independently a cation of one or more transition metal elements of Ti, V, Cr, Mn, Fe, Co, Ni, Cu, Zn, Sn, and W.

The modified compounds of each material may be a compound of the material subjected to doping modification and/or surface coating modification.

In some implementations, the positive electrode active material layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode active material layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared in the following manner: the above components for preparing the positive electrode sheet, e.g., the positive electrode active material, the conductive agent, the binder, and any other components, are dispersed in a solvent (e.g., N-methylpyrrolidone) to form a positive electrode slurry; the positive electrode slurry is coated on the positive electrode current collector, and the positive electrode sheet can be obtained after processes such as drying and cold-pressing.

### [Negative Electrode Sheet]

The negative electrode sheet comprises a negative electrode current collector and a negative electrode active material layer provided on at least one surface of the negative electrode current collector, the negative electrode active material layer comprising a negative electrode active material.

As an example, the negative electrode current collector has two surfaces opposite in its own thickness direction, and the negative electrode active material layer is provided on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may use a negative electrode active material well-known in the art for batteries. As an example, the negative electrode active material may comprise at least one of the following materials: synthetic graphite, natural graphite, soft carbon, hard carbon, a silicon-based material, a tin-based material, titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. When the battery is a lithium ion battery, the titanate uses lithium titanate. When the battery is a sodium ion battery, the titanate uses sodium titanate. However, the present application is not limited to these materials, and other conventional materials that can be used as a negative electrode active material of a battery may also be used. These negative electrode active materials may be used alone or in combination of two or more thereof.

In some implementations, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some implementations, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer further optionally includes other auxiliaries, for example, a thickener (such as sodium carboxymethyl cellulose (CMC-Na)).

In some implementations, the negative electrode sheet may be prepared in the following manner: the above components for preparing the negative electrode sheet, e.g., the negative electrode active material, the conductive agent, the binder, or any other components, are dispersed in a solvent (e.g., deionized water) to form a negative electrode slurry; the negative electrode slurry is coated on the negative electrode current collector, and after processes such as drying and cold pressing, the negative electrode sheet can be obtained.

### [Electrolyte]

The electrolyte functions to conduct ions between the positive electrode sheet and the negative electrode sheet. The type of the electrolyte is not specifically limited in the present application, and may be selected according to a requirement.

In some implementations, the electrolyte uses an electrolyte solution. The electrolyte solution includes an electrolyte salt and a solvent.

In some implementations, the electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations of the present application, when the battery is a sodium-ion battery, the electrolyte sodium salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethylsulfonyl)imide.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte solution optionally further includes a negative electrode film-forming additive, a positive electrode film-forming additive, and may further include other additives capable of improving specific performance of the battery, for example, an additive improving overcharge performance of the battery, an additive improving high-temperature or low-temperature performance of the battery, and the like.

### [Separator]

In some implementations, the battery further comprises a separator. The type of the separator is not particularly limited in the present application, and any well-known porous separator with good chemical stability and mechanical stability may be used.

In some implementations, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the positive electrode sheet, the negative electrode sheet, and the separator may be manufactured into an electrode assembly through a winding process or a lamination process.

In some implementations, the battery may comprise an outer package. The outer package may be used to package the foregoing electrode assembly and electrolyte.

In some implementations, the outer package of the battery may be a hard casing, for example, a hard plastic casing, an aluminum casing, or a steel casing. The outer package of the battery may also be a pouch, such as a bag-type pouch. The material of the pouch may be plastic, and examples of the plastic include polypropylene, polybutylene terephthalate, and polybutylene succinate.

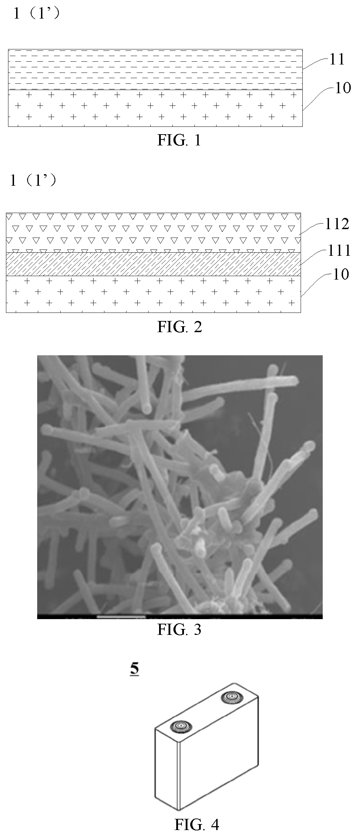

The shape of the battery is not particularly limited in the present application, and may be a cylindrical shape, a square shape, or any other shape. For example, FIG. 4 shows a battery 5 with a square structure as an example.

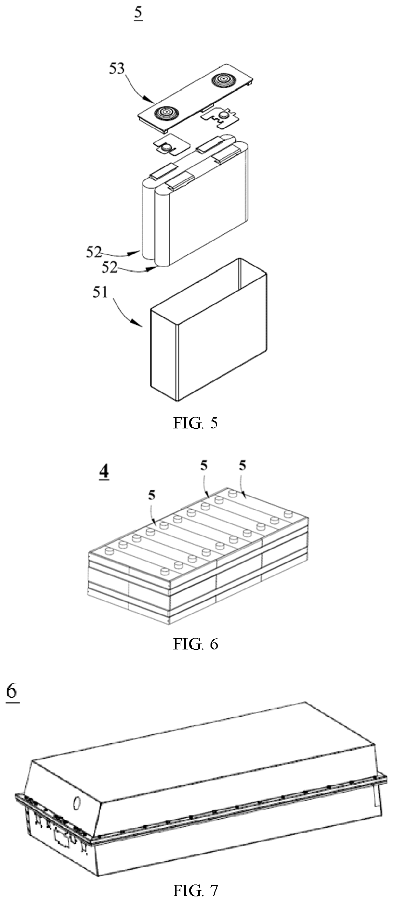

In some implementations, referring to FIG. 5, the outer package may comprise a housing 51 and a cover plate 53. Here, the housing 51 may comprise a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is infiltrated into the electrode assembly 52. There may be one or a plurality of electrode assemblies 52 included in the battery 5, and the number may be selected by those skilled in the art according to specific practical requirements.

In some implementations, the battery may be assembled into a battery module, there may be one or a plurality of batteries included in the battery module, and the specific number may be selected by those skilled in the art according to the application and capacity of the battery module.

FIG. 6 shows a battery module 4 as an example. Referring to FIG. 6, in the battery module 4, a plurality of batteries 5 may be arranged sequentially in the length direction of the battery module 4. Certainly, the batteries may alternatively be arranged in any other manner. Further, the plurality of batteries 5 may be fixed by a fastener.

Optionally, the battery module 4 may further comprise a casing having an accommodating space in which the plurality of batteries 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

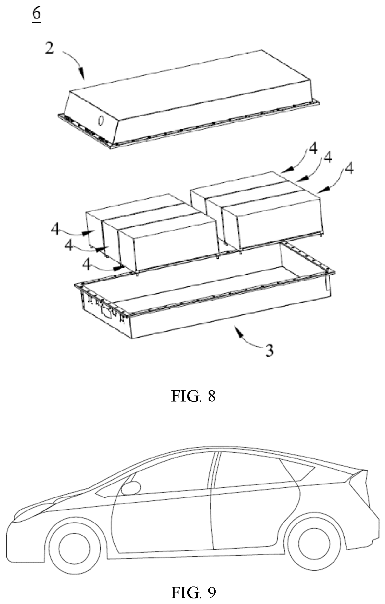

FIG. 7 and FIG. 8 show a battery pack 6 as an example. Referring to FIG. 7 and FIG. 8, a battery case and a plurality of battery modules 4 disposed in the battery case may be included in the battery pack 6. The battery case comprises an upper case 2 and a lower case 3, the upper case 2 being capable of covering the lower case 3 and forming a closed space for accommodating the battery modules 4. The plurality of battery modules 4 may be arranged in any manner in the battery case.

In addition, the present application further provides an electric device, comprising at least one of the battery, the battery module, or the battery pack provided in the present application. The battery, the battery module, or the battery pack may be used as a power supply of the electric device, or may be used as an energy storage unit of the electric device. The electric device may comprise a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

As the electric device, the battery, the battery module, or the battery pack may be selected according to the use requirements thereof.

FIG. 9 shows an electric device as an example. The electric device is a pure electric vehicle, a hybrid electric vehicle, a plug-in hybrid electric vehicle, or the like. In order to meet the demand for high power and high energy density of a battery by the electric device, a battery pack or a battery module may be used.

The apparatus as another example may be a cell phone, a tablet computer, a notebook computer, or the like. This apparatus is generally required to be thin and lightweight, and may use a battery as a power supply.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

### Embodiment 1

### 1. Preparation of Negative Electrode Sheet

SiC, superconducting carbon (SuperP), a whisker carbon nanotube, and lithium polyacrylate (PAALi) were added at a mass ratio of 91.8%: 1.1%: 5%: 2.1% to a solvent (deionized water), and stirred uniformly under the action of a vacuum stirrer, a slurry had a solid content of 45%, and was coated on a negative electrode current collector copper foil, dried in an oven, and cold-pressed to obtain a negative electrode sheet, wherein the thickness of the negative active material layer was 201 µm.

### 2. Preparation of Positive Electrode Sheet

NCM96 (Ni_{0.94}Co_{0.03}Mn_{0.03}O₂), SuperP, and PVDF were added at a mass ratio of 96%: 2.6%: 1.4% to NMP, stirred uniformly under the action of the vacuum stirrer, coated on both sides of an aluminum foil, dried in the oven, and cold-pressed to obtain a positive electrode sheet, wherein the thickness of the positive active material layer was 436 µm.

### 3. Preparation of Electrolyte Solution

In a glove box under an argon atmosphere (H₂O<0.1 ppm, and O₂<0.1 ppm), ethylene carbonate (EC), ethyl methyl carbonate (EMC), and diethyl carbonate (DEC) were mixed at a volume ratio of 1:1:1 to obtain an organic solvent, and fully-dried electrolyte salt LiPF6 was dissolved in the above solvent, and mixed uniformly to obtain an electrolyte solution with a concentration of 1 mol/L.

### 4. Separator

A porous polyethylene film was used as a separator.

### 5. Preparation of Battery

The positive electrode sheet, the separator, and the negative electrode sheet were stacked in sequence, so that the separator was located between the positive and negative electrode sheets to play an isolation role, and then wound to obtain an electrode assembly. The electrode assembly was placed in an outer package, and the above prepared electrolyte solution was injected into a dried lithium-ion battery, and subjected to vacuum sealing, standing, chemical formation, and shaping to obtain a lithium-ion battery.

**The battery preparation methods in Embodiment 2, Comparative Example 1, Comparative Example 2, and Embodiment 1 were the same as those in Embodiment 1, and the differences were detailed in Table 1.**

### Embodiment 3

### 1. Preparation of Negative Electrode Sheet

SiC, superconducting carbon (SuperP), and lithium polyacrylate (PAALi) were added at a mass ratio of 96.8%: 1.1%: 2.1% to a solvent (deionized water), and stirred uniformly under the action of a vacuum stirrer, a slurry had a solid content of 45%, and was coated on a negative electrode current collector copper foil and dried in an oven to form a first active material layer, wherein the thickness of the first active material layer was 61 µm.

SiC, superconducting carbon (SuperP), a whisker carbon nanotube, and lithium polyacrylate (PAALi) were added at a mass ratio of 96.5%: 1.1%: 0.3%: 2.1% to the solvent (deionized water), stirred uniformly under the action of the vacuum stirrer, and coated on one side of the first active material layer away from the copper foil to form a second active material layer which was dried in the oven and cold-pressed to obtain a negative electrode sheet, wherein the thickness of the second active material layer was 140 µm.

### 2. Preparation of Positive Electrode Sheet

NCM96 (Ni_{0.94}Co_{0.03}Mn_{0.03}O₂), SuperP, and PVDF were added at a mass ratio of 96%: 2.6%: 1.4% to NMP, stirred uniformly under the action of the vacuum stirrer, coated on both sides of an aluminum foil, dried in the oven, and cold-pressed to obtain a positive electrode sheet, wherein the thickness of the positive active material layer was 436 µm.

### 3. Preparation of Electrolyte Solution

In a glove box under an argon atmosphere (H₂O<0.1 ppm, and O₂<0.1 ppm), ethylene carbonate (EC), ethyl methyl carbonate (EMC), and diethyl carbonate (DEC) were mixed at a volume ratio of 1:1:1 to obtain an organic solvent, and fully-dried electrolyte salt LiPF6 was dissolved in the above solvent, and mixed uniformly to obtain an electrolyte solution with a concentration of 1 mol/L.

### 4. Separator

A porous polyethylene film was used as a separator.

### 5. Preparation of Battery

The positive electrode sheet, the separator, and the negative electrode sheet were stacked in sequence, so that the separator was located between the positive and negative electrode sheets to play an isolation role, and then wound to obtain an electrode assembly. The electrode assembly was placed in an outer package, and the above prepared electrolyte solution was injected into a dried lithium-ion battery, and subjected to vacuum sealing, standing, chemical formation, and shaping to obtain a lithium-ion battery.

**The battery preparation methods in Embodiments 4-12 were the same as those in Embodiment 3, and the differences were detailed in Table 2.**

### Embodiment 13

### 1. Preparation of Negative Electrode Sheet

SiC, superconducting carbon (SuperP), and lithium polyacrylate (PAALi) were added at a mass ratio of 96.8%: 1.1%: 2.1% to a solvent (deionized water), and stirred uniformly under the action of a vacuum stirrer, a slurry had a solid content of 45%, and was coated on a negative electrode current collector copper foil, dried in an oven, and cold-pressed to obtain a negative electrode sheet, wherein the thickness of the negative active material layer was 201 µm.

### 2. Preparation of Positive Electrode Sheet

NCM96, superconducting carbon (SuperP), and PVDF were added at a mass ratio of 96%: 2.6%: 1.4% to the solvent (deionized water), and stirred uniformly under the action of a vacuum stirrer, a slurry had a solid content of 72%, and was coated on the negative electrode current collector copper foil and dried in the oven to form a first active material layer, wherein the thickness of the first active material layer was 136 µm.

NCM96, superconducting carbon (SuperP), a whisker carbon nanotube, and PVDF were added at a mass ratio of 95.7%: 2.6%: 0.3%: 1.4% to the solvent (deionized water), stirred uniformly under the action of the vacuum stirrer, and coated on one side of the first active material layer away from the copper foil to form a second active material layer which was dried in the oven, and cold-pressed to obtain a negative electrode sheet, wherein the thickness of the second active material layer was 300 µm.

### 3. Preparation of Electrolyte Solution

In a glove box under an argon atmosphere (H₂O<0.1 ppm, and O₂<0.1 ppm), ethylene carbonate (EC), ethyl methyl carbonate (EMC), and diethyl carbonate (DEC) were mixed at a volume ratio of 1:1:1 to obtain an organic solvent, and fully-dried electrolyte salt LiPF6 was dissolved in the above solvent, and mixed uniformly to obtain an electrolyte solution with a concentration of 1 mol/L.

### 4. Separator

A porous polyethylene film was used as a separator.

### 5. Preparation of Battery

The positive electrode sheet, the separator, and the negative electrode sheet were stacked in sequence, so that the separator was located between the positive and negative electrode sheets to play an isolation role, and then wound to obtain an electrode assembly. The electrode assembly was placed in an outer package, and the above prepared electrolyte solution was injected into a dried lithium-ion battery, and subjected to vacuum sealing, standing, chemical formation, and shaping to obtain a lithium-ion battery.

**The battery preparation methods in Embodiments 14-22 were the same as to those in Embodiment 13, and the differences were detailed in Table 3.**

**Table 1**

| | Negative Electrode Active Material Layer | | | | | | Positive Electrode Active Material Layer | | | | | |
|---|---|---|---|---|---|---|---|---|---|---|---|---|
| | Content (%) of Negative Electrode Active Material SiC | Additive | | Tortuosity | Porosity (%) | Thicknes s (µm) | Content (%) of NCM96 | Additive | | Tortuosity | Porosity (%) | Thickness (µm) |
| | | Type | Content (%) | | | | | Type | Content (%) | | | |
| Comparative Example 1 | 96.8 | / | / | 5.8 | 26 | 201 | 96 | / | / | 7.9 | 22 | 436 |
| Comparative Example 2 | 96.8 | / | / | 3.9 | 30 | 120 | 96 | / | / | 6.6 | 26 | 300 |
| Embodiment 1 | 91.8 | Whisker Carbon Nanotube | 5 | 3.9 | 39 | 201 | 96 | / | / | 7.9 | 22 | 436 |
| Embodiment 2 | 96.8 | / | / | 5.8 | 26 | 201 | 91 | Whisker Carbon Nanotube | 5 | 5.4 | 33 | 436 |

**Table 2**

| | Negative Electrode Sheet | | | | | | | | | | | | |
|---|---|---|---|---|---|---|---|---|---|---|---|---|---|
| | Second Active Material Layer | | | | | | | | | | | First Active Material Layer | Ratio of Thickness of Second Active Material Layer to Thickness of First Active Material Layer |
| | Active Material | | Conductive Agent | | Additive | | Binder | | Thickness (µm) | Porosity (%) | Tortuosity | Thickness (µm) | |
| | Type | Content (%) | Type | Content (%) | Type | Content (%) | Type | Content (%) | | | | | |
| Embodiment 3 | SiC | 96.5 | SuperP | 1.1 | Whisker Carbon Nanotube | 0.3 | PAALi | 2.1 | 140 | 21 | 5.68 | 61 | 1.3 |
| Embodiment 4 | SiC | 96.3 | SuperP | 1.1 | Whisker Carbon Nanotube | 0.5 | PAALi | 2.1 | 140 | 26 | 5.61 | 61 | 1.3 |
| Embodiment 5 | SiC | 91.8 | SuperP | 1.1 | Whisker Carbon Nanotube | 5 | PAALi | 2.1 | 140 | 38 | 3.29 | 61 | 1.3 |
| Embodiment 6 | SiC | 86.8 | SuperP | 1.1 | Whisker Carbon Nanotube | 10 | PAALi | 2.1 | 140 | 43 | 2.21 | 61 | 1.3 |
| Embodiment 7 | SiC | 84.8 | SuperP | 1.1 | Whisker Carbon Nanotube | 12 | PAALi | 2.1 | 140 | 46 | 2.04 | 61 | 1.3 |
| Embodiment 8 | SiC | 91.8 | SuperP | 1.1 | Whisker Carbon Nanotube | 5 | PAALi | 2.1 | 59 | 47 | 1.62 | 61 | 0.97 |
| Embodiment 9 | SiC | 91.8 | SuperP | 1.1 | Whisker Carbon Nanotube | 5 | PAALi | 2.1 | 140 | 30 | 4.26 | 70 | 1 |
| Embodiment 10 | SiC | 91.8 | SuperP | 1.1 | Whisker Carbon Nanotube | 5 | PAALi | 2.1 | 140 | 36 | 3.41 | 64 | 1.2 |
| Embodiment 11 | SiC | 91.8 | SuperP | 1.1 | Whisker Carbon Nanotube | 5 | PAALi | 2.1 | 140 | 38 | 3.27 | 58 | 1.4 |
| Embodiment 12 | SiC | 91.8 | SuperP | 1.1 | Whisker Carbon Nanotube | 5 | PAALi | 2.1 | 109 | 42 | 1.83 | 61 | 1.79 |

**Table 3**

| | **Positive Electrode Sheet** | | | | | | | | | | | | |
|---|---|---|---|---|---|---|---|---|---|---|---|---|---|
| | Second Active Material Layer | | | | | | | | | | | First Active Material Layer | Ratio of Thickness of Second Active Material Layer to Thickness of First Active Material Layer |
| | Active Material | | Conductive Agent | | Additive | | Binder | | Thickness (µm) | Porosity (%) | Tortuosity | Thickness (µm) | |
| | Type | Content (%) | Type | Content (%) | Type | Content (%) | Type | Content (%) | | | | | |
| Embodiment 13 | NCM96 | 95.7 | SuperP | 2.6 | Whisker Carbon Nanotube | 0.3 | PVDF | 1.4 | 300 | 20 | 5.6 | 136 | 1.3 |
| Embodiment 14 | NCM96 | 95.5 | SuperP | 2.6 | Whisker Carbon Nanotube | 0.5 | PVDF | 1.4 | 300 | 26 | 4.8 | 136 | 1.3 |
| Embodiment 15 | NCM96 | 91 | SuperP | 2.6 | Whisker Carbon Nanotube | 5 | PVDF | 1.4 | 300 | 38 | 3.5 | 136 | 1.3 |
| Embodiment 16 | NCM96 | 86 | SuperP | 2.6 | Whisker Carbon Nanotube | 10 | PVDF | 1.4 | 300 | 45 | 2.4 | 136 | 1.3 |
| Embodiment 17 | NCM96 | 84 | SuperP | 2.6 | Whisker Carbon Nanotube | 12 | PVDF | 1.4 | 300 | 47 | 2.1 | 136 | 1.3 |
| Embodiment 18 | NCM96 | 91 | SuperP | 2.6 | Whisker Carbon Nanotube | 5 | PVDF | 1.4 | 150 | 41 | 2.9 | 150 | 1 |
| Embodiment 19 | NCM96 | 91 | SuperP | 2.6 | Whisker Carbon Nanotube | 5 | PVDF | 1.4 | 180 | 38 | 3.6 | 150 | 1.2 |
| Embodiment 20 | NCM96 | 91 | SuperP | 2.6 | Whisker Carbon Nanotube | 5 | PVDF | 1.4 | 175 | 41 | 3.2 | 125 | 1.4 |
| Embodiment 21 | NCM96 | 91 | SuperP | 2.6 | Whisker Carbon Nanotube | 5 | PVDF | 1.4 | 200 | 40 | 3.1 | 125 | 1.6 |
| Embodiment 22 | NCM96 | 91 | SuperP | 2.6 | Whisker Carbon Nanotube | 5 | PVDF | 1.4 | 280 | 45 | 1.9 | 125 | 2.24 |

### Performance Test:

### 1. Test Method of Thickness of Active Material Layer

Testing was performed by a scanning electron microscopy.

### 2. Test Method of Tortuosity of Active Material Layer

The pore ionic resistance Rion was tested by means of a symmetric battery, and the tortuosity τ was calculated according to the porosity, the thickness of the electrode sheet, and the conductivity of the electrolyte solution. τ=(Rion×A×ε×σ)/d, where Rion was the pore ionic resistance, A was the area of the electrode sheet in cm², ε was the porosity in %, σ was the conductivity in ms/cm, and d was the thickness of the electrode sheet in cm.

### 3. Test Method of Porosity of Electrode Sheet

30 round pieces with good appearance and no powder falling off from the edge were selected and put into a sample cup. The number of pieces was recorded, and the apparent volume was calculated. Testing was performed: the sample cup containing a sample was placed in a true density tester, the test system was sealed, a helium gas was introduced according to the procedure, the pressure of a gas in a sample chamber and an expansion chamber was detected, and then the true volume was calculated according to the Bohr's law (PV=nRT), so as to obtain the porosity of a sample to be tested.

### 4. Test Method of Rate Performance

A laminated three-electrode test method was that the positive electrode sheet and the negative electrode sheet were taken out and washed by immersion in the DMC solvent for 72 hours or more; when the electrolyte solution solvent, the lithium salt, and the additive were completely leached out, the electrode sheets were dried in a vacuum oven; and then the positive electrode sheet and the negative electrode sheet were assembled into a laminated three-electrode battery cell, with a copper wire as a reference electrode. Then, the laminated battery cell was tested for the lithium precipitation charging rate at each SOC at 25°C. The maximum charging rate was terminated when the potential of the reference electrode dropped to 0 mV, and the maximum charging rate at this SOC was recorded. According to this method, 5% SOC was used as a point, the maximum charging rate was tested at 5% SOC intervals, e.g., from 20% SOC, 25% SOC, 30% SOC up to 100% SOC, and the continuous charging time from 20% SOC to 80% SOC was calculated according to the maximum charging rate within the range of 20% SOC to 80% SOC obtained by this test, which was the fast-charging time.

### 5. Test Method of Energy Density

Test for Capacity of Battery Cell: The battery cell prepared above was allowed to stand at 25°C for 2h, ensuring that the battery cell temperature was 25°C. At 25°C, the battery cell was charged at 0.1C to a charge cutoff voltage, and then constant-voltage charging was continued at the charge cutoff voltage until the current reached 0.05C, and the charge was cut off (where C represented the rated capacity of the battery cell). The battery cell was allowed to stand at 25°C for 1h. At 25°C, the battery cell was discharged at 0.1C to a discharge cutoff voltage, and the total discharge capacity C₀ discharged from the battery cell was recorded. The total discharge energy was E₀.

Measurement of Weight of Battery Cell: The battery cell was placed on an electronic scales until the weight was stable, and the battery cell weight value M₀ was read.

Calculation of Energy Density: The battery cell discharge energy E₀/the battery cell weight M₀ was the energy density of the battery cell.

The test results of Comparative Example 1, Comparative Example 2, Embodiment 1, and Embodiment 2 are shown in Table 4.

The test results of Embodiments 3-12 are shown in Table 5.

The test results of Embodiments 13-22 are shown in Table 6.

**Table 4**

| | Battery | |
|---|---|---|
| | Rate Performance (min) | Energy Density (Wh/kg) |
| Comparative Example1 | 68 | 380 |
| Comparative Example 2 | 60 | 302 |
| Embodiment 1 | 24 | 406 |
| Embodiment 2 | 41 | 403 |

**Table 5**

| | Battery | |
|---|---|---|
| | Rate Performance (min) | Energy Density (Wh/kg) |
| Embodiment 3 | 49 | 423 |
| Embodiment 4 | 36 | 411 |
| Embodiment 5 | 20 | 405 |
| Embodiment 6 | 15 | 399 |
| Embodiment 7 | 7 | 390 |
| Embodiment 8 | 45 | 336 |
| Embodiment 9 | 31 | 414 |
| Embodiment 10 | 26 | 414.6 |
| Embodiment 11 | 15 | 416 |
| Embodiment 12 | 6 | 350 |

**Table 6**

| | Battery | |
|---|---|---|
| | Rate Performance (min) | Energy Density (Wh/kg) |
| Embodiment 13 | 52 | 418 |
| Embodiment 14 | 49 | 412 |
| Embodiment 15 | 34 | 403 |
| Embodiment 16 | 29 | 398 |
| Embodiment 17 | 21 | 390 |
| Embodiment 18 | 32 | 312 |
| Embodiment 19 | 24 | 405 |
| Embodiment 20 | 22 | 404 |
| Embodiment 21 | 33 | 311 |
| Embodiment 22 | 19 | 401 |

Conclusion: It can be seen from Tables 1-6 that the electrode sheet provided in the present application can improve the rate performance and the energy density of batteries, which indicates that in the present application, by providing, on the electrode sheet, the additive provided with through holes, the transmission path of the electrolyte solution can be shortened, and the transmission rate of the electrolyte solution can be increased, and for a thick active material layer, the acceleration of the transmission rate can accelerate the infiltration effect of the electrolyte solution on the active material layer and improve the utilization rate of the active material.

It can be seen from the comparison of Embodiments 3-22 with Embodiments 1 and 2 that, regardless of the positive electrode sheet or the negative electrode sheet, the active material layer is designed in layers, and the rate performance of batteries can be further improved by providing the additive in the active material layer away from the current collector compared with the active material layer being not layered (the additive is provided in the entire active material layer).

It can be seen from the comparison of Embodiments 3-12 with Embodiments 13-22 that the rate performance of batteries can be further improved by providing the additive on the negative electrode sheet.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A secondary battery, comprising: a positive electrode sheet and a negative electrode sheet, the positive electrode sheet and/or the negative electrode sheet comprising:
a current collector; and
an active material layer, wherein the active material layer is provided on at least one side of the current collector, the active material layer comprises an additive, the additive is provided with through holes, and the tortuosity of the active material layer is 1.9-5.68.

2. The secondary battery according to claim 1, wherein the tortuosity of the active material layer on the positive electrode sheet is 1.9-5.6.

3. The secondary battery according to claim 1 or 2, wherein the tortuosity of the active material layer on the negative electrode sheet is 1.62-5.68.

4. The secondary battery according to any one of claims 1-3, wherein based on the total mass of the active material layer, the mass percentage of the additive is 0.5%-10%.

5. The secondary battery according to any one of claims 1-4, wherein one or more of the following conditions are satisfied:
the aperture of the through holes is 100 nm-500 nm; and
the length of the through holes is 1 µm-20 µm.

6. The secondary battery according to any one of claims 1-5, wherein the additive comprises a whisker carbon nanotube.

7. The secondary battery according to any one of claims 1-6, wherein the thickness of the active material layer on the positive electrode sheet is greater than or equal to 300 µm; or
the thickness of the active material layer on the negative electrode sheet is 120 µm-210 µm.

8. The secondary battery according to any one of claims 1-7, wherein the porosity of the positive electrode sheet and/or the negative electrode sheet is 20%-47%.

9. The secondary battery according to any one of claims 1-8, wherein the active material layer comprises a first active material layer and a second active material layer, the first active material layer is provided on at least one side of the current collector, the second active material layer is provided on one side of the first active material layer away from the current collector, and the second active material layer is provided with the additive.

10. The secondary battery according to claim 9, wherein the thickness of the second active material layer is greater than or equal to the thickness of the first active material layer.

11. The secondary battery according to claim 9 or 10, wherein a ratio of the thickness of the second active material layer to the thickness of the first active material layer is 1.2-1.4.

12. The secondary battery according to any one of claims 1-11, wherein the active material layer of the negative electrode sheet comprises the additive.

13. A method for preparing the secondary battery according to any one of claims 1-12, comprising: preparing a positive electrode sheet and a negative electrode sheet, a method for preparing the positive electrode sheet and/or the negative electrode sheet comprising:
forming an active material layer on at least one side of a current collector, wherein the active material layer comprises an additive, the additive is provided with through holes, and the tortuosity of the active material layer is 1.9-5.68.

14. The method according to claim 13, wherein a method for forming the active material layer comprises:
forming a first active material layer on at least one side of the current collector; and
forming a second active material layer on one side of the first active material layer away from the current collector, wherein the second active material layer comprises the additive.

15. An electric device, comprising the secondary battery according to any one of claims 1-12.
